# EUROPÄISCHE PATENTANMELDUNG

(11) **EP 0 675 466 A2**
(43) Veröffentlichungstag der Anmeldung: **04.10.1995**
(21) Anmeldenummer: 95890066.4
(22) Anmeldetag: 23.03.1995
(51) Int. Cl.: G07D 7/00, G01N 21/88

(54) **Verfahren und Anordnung zum Erkennen bzw. Kontrolle von Gegenständen**

(30) Priorität: 28.03.1994 AT 656/94
(71) Anmelder: Österreichisches Forschungszentrum Seibersdorf Ges.m.b.H., A-1010 Wien (AT)
(72) Erfinder: Mayer, Konrad, Dipl.-Ing., A-1232 Wien (AT); Krattenthaler, Werner, Dr., A-2346 Maria Enzersdorf (AT)

(57) **Zusammenfassung**

Die Erfindung bezieht sich auf ein Verfahren und eine Anordnung zur Kontrolle der Oberflächenbeschaffenheit von Gegenständen (1), z.B. Banknoten bei dem die Gegenstände (1) mit zumindest einer Bildaufnahmeeinheit (2) auf eine Zeilenkamera abgebildet werden, an welche Zeilenkamera (9) Bildverarbeitungs- und Auswerteeinheiten (14) angeschlossen sind, dadurch gekennzeichnet, daß mit der eine Mehrzahl von Bildkanälen (30) aufweisenden Bildaufnahmeeinheit ein- und derselbe Gegenstandsbereich (6) betrachtet bzw. mehrfach abgebildet wird, wobei die einzelnen über die jeweiligen Bildkanäle (30) übermittelten Bilder dieses Gegenstandsbereiches (6) auf ein- und denselben, insbesondere einzigen, Zeilensensor (10) der Zeilen -bzw. TDI-Kamera (9) abgebildet werden.

## Beschreibung

Die Erfindung betrifft ein Verfahren gemäß dem Oberbegriff des Patentanspruches 1 sowie eine Anordnung gemäß dem Oberbegriff des Patentanspruches 6.

Für die Oberflächenkontrolle von Gegenständen, z.B. die automatische Qualitätskontrolle von Druckerzeugnissen sind leistungsfähige Bildaufnahme- und -verarbeitungseinrichtungen notwendig, mit denen die Oberfläche bzw. die Bereiche davon, z.B. das Druckbild mit einem oder mehreren Bildkanälen erfaßt, bearbeitet und bewertet wird. In den folgenden Ausführungen wird der Stand der Technik für zwei wichtige Bereiche dargestellt und zwar für die visuelle Qualitätskontrolle von Banknoten sowie für den Einsatz von Glasfaserlichtleitern.

Für die Qualitätskontrolle von Banknoten werden üblicherweise Maschinen mit einer Vielzahl von Sensoren verwendet. Durch ein auf der Maschine angebrachtes Transportsystem (z.B. einer Riemenführung) werden die Banknoten an den einzelnen Sensoren vorbeigeführt. Die Sensoren können verschiedenen Aufgabengruppen zugeordnet werden und überprüfen z.B. Sicherheitsmerkmale, Abmessungen, das Druckbild der Banknoten usw. Die Daten aller Sensoren werden von einer Steuereinheit gesammelt und verknüpft, die daraus eine Entscheidung bestimmt, ob die Banknote den Erfordernissen entspricht.

Die bildhafte Aufnahme der Banknoten erfolgt vorzugsweise mit einerZeilenkamera. Eine Zeilenkamera hatals bildgebendes Element üblicherweise nur eine einzige Linie bzw. einen einzigen Zeilensensor (die bzw. der ihrerseits aus einer Reihe von Sensorpunkten zusammengesetzt ist). Diese Linie ist objektseitig auf eine feste räumliche Position gerichtet. Dadurch, daß eine Banknote mit Hilfe der Transporteinrichtung mit einer vorgegebenen Geschwindigkeit an der Bildaufnahmeeinheit vorbeibewegt wird, schaut die Zeile der Zeilenkamera jedesmal auf eine andere Stelle der Banknote. Durch Aneinanderreihen von unmittelbar nacheinander aufgenommenen Zeilen (d.h. zeilenweises "Scannen" der Banknote) entsteht in der Folge wiederum eine flächenhafte Aufnahme, die anschließend als Grundlage für die weitere Bildverarbeitung dient.

Bei der Banknotenkontrolle ist es meistens nicht ausreichend, nur eine einzige Ansicht der Banknote aufzunehmen und zu verarbeiten. Als Minimalerfordernis ist meist eine Überprüfung der Vorder- und Rückseite der Banknote verlangt. Es kann jedoch vorteilhaft sein, noch eine Anzahl weiterer Ansichten vorzusehen (z.B. Spektral-, Durchlicht- oder Detailansichten). Dabei besteht der herkömmliche Weg darin, jede Ansicht mit einer eigenen Aufnahmeeinheit (Zeilenkamera) aufzuzeichnen.

Für Farbaufnahmen gibt es auch die Möglichkeit, eine Farbzeilenkameraeinzusetzen, mitdermandie Farbkanäle Rot, Grün und Blau mit nur einer einzigen Bildaufnahmeeinheit erfassen kann. Eine Farbzeilenkamera besitzt einen Träger, auf dem vorzugsweise drei Zeilensensoren nebeneinander angeordnet sind. Die spektrale Aufteilung des Lichts auf die einzelnen Zeilen erfolgt entweder durch ein jeder Zeile vorgelagertes (z.B. auf sie aufgedampftes) Farbfilter oder durch eine im Strahlengang angebrachte Beugungsoptik, die den betreffenden Spektralbereich auf die zugehörige Zeile ablenkt.

Um mehrere (flächenhafte) unterschiedliche Ansichten eines Gegenstandes mit nur einer einzigen Bildaufnahmeeinheit aufzuzeichnen, gibt es ein System mit Glasfaserlichtleitern. Diese funktionieren wie Endoskope und werden im folgenden als "Polypen" bezeichnet. Beim Polypsystem gibt es eine Reihe von "Armen", die Bildkanäle darstellen und von der Kamera ausgehen und von denen jeder aus einem dichten Bündel von Glasfasern besteht. Am aufnahmeseitigen Ende jedes Polyps ist eine Optik angebracht, die ein Bild auf das Glasfaserbündel umsetzt. Jede einzelne Glasfaser des Bündels leitet die auf sie aufgetroffene Lichtmenge zum anderen, kameraseitigen Ende weiter, wo dieses Licht mit einer weiteren Optik auf den Bildsensor, üblicherweise eine rechteckige CCD-Matrix, abgestrahlt wird. Damit das aufgenommene Bild mit dem Glasfaserbündel zur Kamera gebracht werden kann, sind die Glasfasern im Polyparm geordnet, d.h. die Lage jeder Glasfaser im Bezug auf die anderen Fasern korrespondiert am kamerafernen Ende mit der Lage am kameranahen Ende. Mehrere solcher Arme sind kameraseitig in einer fixen Anordnung auf einem Objektivadapter montiert und am Objektivanschluß der Kamera angeschraubt. Mit dem Polypsystem können demgemäß in mehreren Bildkanälen gleichzeitig mehrere annähernd kreisrunde Bildausschnitte (jeder Polyparm erzeugt einen Bildausschnitt) auf dem flächenhaften Bildsensor der Kamera dargestellt werden.

Ziel der Erfindung ist es, ein genaues und betriebssicheres Verfahren und eine einfach aufgebaute Anordnung zu erstellen, mit denen man mit nur einer Bildaufnahmeeinrichtung die Oberfläche des Gegenstandes ausreichend genau untersuchen kann.

Erfindungsgemäß ist ein Verfahren durch die im kennzeichnenden Teil des Patentanspruches 1 angeführten Merkmale charakterisiert. Eine erfindungsgemäße Anordnung ist durch die im Kennzeichen des Patentanspruches 6 angeführten Merkmale charakterisiert.

Die Idee der Erfindung besteht darin, mehrere Ansichten desselben Gegenstandsbereiches jeweils über einen eigenen Bildkanal, gegebenenfalls mit einem Spiegel- und/oder Prismensystem und/oder mit dem oben beschriebenen Polypsystem, aufzunehmen bzw. die aufgenommenen Bilder auf ein und denselben Zeilensensar einer Zeilenkamera abzubilden.

Unter einem Bildkanal wird erfindungsgemäß jede Anordnung verstanden, welche ein eigenes Bild von dem betrachteten Gegenstandsbereich auf einer Zeilenkamera abbilden kann. Derartige Bildkanäle können z.B. mit Lichtleitern, Spiegeln, Prismen realisiert werden.

Z.B. können die einzelnen Bildkanäle ausbildenden Lichtleiter auf dem kameraseitigen Objektivadapter entlang einer Linie angeordnet werden, sodaß die von ihnen auf dem Zeilensensor abgebildeten insbesondere kreisrunden Bildausschnitte nebeneinander zu liegen kommen. Die Verbindungslinie der Kreismittelpunkte sollte dabei mit der Sensorzeile des Zeilensensors übereinstimmen. Durch elektronisches Aneinanderreihen nacheinander aufgenommener bzw. abgebildeter Zeilen entsteht ein flächenhaftes Bild, von dem auf einem Bildschirm eine vorgegebene Anzahl von Ansichten nebeneinander abgebildet werden kann. Jede Ansicht kann gespeichert und aus dem Gesamtbild herausgelöst und in der Bildauswerteeinheit bearbeitet werden.

Bei der Qualitätskontrolle von Druckerzeugnissen, speziell Banknoten, ist eine Reihe von Ansichten wichtig, z.B. Farb-, Infrarot-, Ultraviolett-, Durchlicht-oder Detailansichten. Wichtig ist der Spezialfall, bei dem drei Bildkanäle mit Filtern versehen und für die Aufzeichnung der Farbbildkanäle Rot, Grün und Blau verwendet werden. Die Vorgangsweise bei der Konstruktion einer derartigen Prüfeinrichtung sieht dann so aus, daß je nach gestellten Anforderungen eine entsprechende Anzahl von repräsentativen Ansichten ausgewählt und ein dazu passendes Polypsystem (hinsichtlich Anzahl an Polyparmen bzw. Bildkanälen, Objektiven, Beleuchtung, Filter) verwendet wird.

Ein Vorteil der Erfindung besteht darin, daß nicht wie bisherfür jede benötigte Ansicht eine eigene Bildaufnahmeeinheit (Zeilenkamera) benötigt wird, sondern daß eine einzige vorzugsweise hochauflösende Zeilenkamera genügt. Insbesondere können mit nur einer Zeilenkamera mit einem einzigen Zeilensensor Farbaufnahmen von den Gegenständen gemacht werden. Man erspart sich dadurch die Verwendung einer Farbzeilenkamera mit mehreren Zeilensensoren, die mit hohen Anschaffungskosten und Platzbedarf verbunden ist.

Als weiterer Vorteil kann die Flexibilität des vorgeschlagenen Polypsystems angesehen werden. Es bleibt dem Anwender überlassen, welchen Gegenstandsbereich er mit einer bestimmten Anzahl von Bildkanälen aufnehmen bzw. abbilden will bzw. ob der gesamte Gegenstand oder nur ein Teilbereich desselben untersucht werden soll. Insbesondere ist es möglich, zusätzlich einen eigenen Bildkanal bzw. Polyparm auf eine Gesamtansicht (z.B. eine Durchlichtaufnahme über den gesamten Querschnitt einer Banknote) oder eine Detailansicht (z.B. das Kinegramm auf der Banknote) einzurichten. Auch ist es unter Umständen möglich, einen Bildkanal, der einer bestimmten Aufgabe zugedacht war, für eine andere Aufgabe einzusetzen.

Der Platzbedarf für die erfindungsgemäße Anordnung spielt eine große Rolle; die erfindungsgemäße Anordnung ist platzsparend, da sie nur eine Zeilenkamera verwendet und die Bildkanäle anpaßbar sind. Sie läßt sich dadurch leicht in ein bestehendes Transportsystem für eine zu kontrollierenden Gegenstand integrieren.

Die Erfindung kann nicht nur zur Kontrolle von Banknoten, sondern kann vorteilhafterweise auch bei diversen anderen Druckerzeugnissen verwendet werden. Beispiele dafür sind bedruckte Verpackungen aus Papier, Karton oder Metallen, Briefmarken, Scheck-, Kredit- oder ähnliche Wertkarten. Auch die Kontrolle von Blechen, Stoffen bzw. Oberflächen beliebiger Art ist denkbar. Die Kontrolle kann einseitig oder beidseitig (Vorder- und Rückseite) erfolgen. Die untersuchten Ansichten können Gesamt- oder Detailansichten, Grauwert- oder Farbansichten usw. sein.

Für Farbaufnahmen werden üblicherweise drei (Farb)Bildkanäle mit den Farben Rot, Grün und Blau verwendet. Für ein Inspektionssystem für Druckerzeugnisse kann es - der gestellten Aufgabe entsprechend - vorteilhaft sein, eine andere Anzahl von (Farb)bildkanälen und/oder andere Farben bzw.

Spektralbereiche (im sichtbaren oder unsichtbaren Spektrum) zur Untersuchung heranzuziehen. Dies kann auf einfachem Weg dadurch erreicht werden, daß jedem zu untersuchenden Spektralbereich ein eigener Bildkanal zugeordnet wird bzw. die Filter in einem Bildkanal ausgetauscht werden.

Die erfindungsgemäße Anordnung läßt sich mit anderen Bildaufnahmesystemen kombinieren. Reicht beispielsweise der Platz für den Anschluß der Polyparme auf dem Objektivadapter oder die für die benötigten Ansichten erzielbare Auflösung nicht aus, so können mehrere Anordnungen mit Zeilenkameras mit jeweils einem Zeilensensor vorgesehen werden, von denen jede mit einer bestimmten Anzahl von Polypenarmen bzw. Bildkanälen ausgestattet ist und damit bestimmte Ansichten aufnimmt (dies entspricht der Vervielfachung der erfindungsgemäßen Anordnung). Weiters ist es möglich, die erfindungsgemäße Anordnung zusätzlich zu einem herkömmlichen Inspektionssystem zu installieren.

Bevorzugte Ausführungsformen der Erfindung sind in der folgenden Beschreibung, den Patentansprüchen und der Zusammenfassung näher erläutert bzw. dargestellt.

Im folgenden wird die Erfindung anhand der Zeichnung beispielsweise näher erläutert. Fig. 1 und 2 zeigen eine Ausführungsform einer erfindungsgemäßen Anordnung und Fig. 3 und 5 bzw. Fig. 6 bis 9 und Fig. 10 alternative Ausführungsformen.

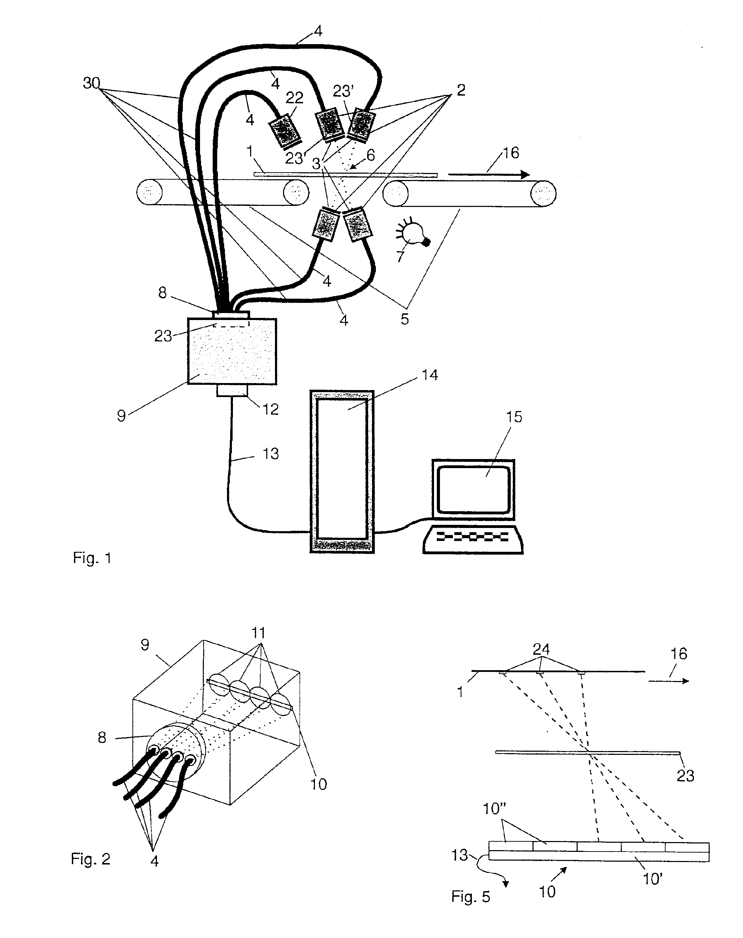

Gemäß Fig.1 wird ein zu betrachtender Gegenstand 1, z.B. eine Banknote, mit einer Transporteinrichtung 5 vor einer Anzahl von Aufnahmeköpfen 2 vorbeibewegt, die, wie mit punktierten Linien angedeutet, einen quer zur Bewegungsrichtung 16 verlaufenden Bereich 6 des Gegenstandes 1 abtasten. Im vorliegenden Fall sind beidseits des Gegenstandes 1 Aufnahmeköpfe 2 angeordnet. Die Anzahl der Aufnahmeköpfe 2 kann je nach Bedarf gewählt werden, es kann z.B. in der Richtung quer zum Gegenstand 1 auch eine Mehrzahl von Aufnahmeköpfen 2 angeordnet sein, die auf denselben Gegenstandsbereich 6 ausgerichtet sind. Mit einer oder mehreren Beleuchtungseinrichtung(en) 7 wird der zu überprüfende Gegenstandsbereich 6 beleuchtet. Weitere Aufnahmeköpfe zur Feststellung von weiteren Merkmalen des Gegenstandes oder anderer Gegenstandsbereiche sind mit 22 bezeichnet.

Im dargestellten Fall sind vor den einzelnen Aufnahmeköpfen 2 austauschbare oder fixe Farbfilter 3 geschaltet bzw. angeordnet, sodaß die Bilder der mit den einzelnen Aufnahmeköpfen 2 betrachtete Gegenstandsbereich 6 in verschiedenfärbigem Licht abgebildet werden. Die einzelnen verschiedenfärbigen Abbildungen ein und desselben betrachteten Gegenstandsbereiches 6 werden über die an die einzelnen Aufnahmeköpfen 2 angeschlossenen Lichtleiter 4 und über einen Objektivadapter 8, der in der Wand einer Zeiienkamera 9 angeordnet ist, dem Zeilensensor 10 dieser Zeilenkamera 9 zugeführt. Jeder Aufnahmekopf 2 mit dem angeschlossenen Lichtleiter 4 bildet einen eigenen Bildkanal 30, über den im wesentlichen derselbe Gegenstandsbereich 6 abgebildet wird.

Fig.2 zeigt ein Detail einer Zeilenkamera, bei der in einer Wand des Gehäuses 9 oder auf einem Träger der Kamera der Objektivadapter 8 angeordnet ist, in dem die einzelnen Lichtleiter 4 festgelegt sind. Vorteilhaft ist es, wenn die Lichtleiter 4 in einer Reihe im Objektivadapter 8 angeordnet sind, die im wesentlichen parallel zum Zeilensensor 10 verläuft. Die einzelnen Lichtleiter 4 übertragen gegebenenfalls über eine in Fig. 1 dargestellte Optik23 ihr Bild auf den Zeilensensor 10 und zwar als Abbildungen 11, die nebeneinander auf dem Zeilensensor 10 abgebildet werden. Auf dem Zeilensensor 10 werden somit die Bilder der einzelnen Bildkanäle 30 nebeneinanderliegend abgebildet. Die Reihenfolge ist an sich egal, da die Bilderkennung und -bewertung bzw. eine Reihung elektronisch erfolgt. Die Abbildungen 11 stellen jeweils dasselbe Bild jedoch in unterschiedlicher spektraler Zusammensetzung dar. Die Anzahl der eingesetzten Bildkanäle 30 ist variabel.

Die unterschiedlichen Farbfilter 3 können an der gezeigten Stelle angeordnet sein; sie können aber auch an irgendeiner anderen Stelle im Bildkanal 30 zwischen dem Gegenstand und dem Zeilensensor 10 angeordnet sein. An sich könnten die Filter auch direkt auf einzelne Bereiche des Zeilensensors 10, z.B. durch Aufdampfen, aufgebracht sein.

Wesentlich ist, daß in der Zeilenkamera lediglich ein einziger Zeilensensor 10 vorgesehen ist, dessen Signale seriell über eine elektronische Sensoreinheit 12 und über eine Leitung 13 der Bildverarbeitungseinheit 14 zugeführt sind, die auch als Auswerteeinheit ausgebildet sein kann. Eine optische Anzeige kann auf einem Monitor 15 erfolgen, der an die Bildverarbeitungseinheit 14 angeschlossen ist. In der Bildverarbeitungseinheit 14 kann z.B. auf elektronischem Weg ein Vergleich der aufgenommenen Bilder mit vorgegebenen Vergleichs- bzw. Musteroberflächen von Gegenständen erfolgen und es kann in dieser Einheit festgestellt werden, ob bzw. in welchem Ausmaß die entsprechenden Prüfungs- bzw. Untersuchungskriterien erfüllt sind.

Wesentlich ist, daß zum Einsatz bei Bildkanälen die Lichtleiter 4 zur Bildübertragung ausgebildet sein müssen, d.h., daß diese Lichtleiter 4 nicht nur zur Übertragung von Helligkeitswerten ausgebildet sind. Die Lichtleiter 4 umfassen eine Anzahl von aus diesem Grund geordnet angeordnete Lichtleiterfasern, wobei die Ordnung der Fasern in den Bildaufnahmeköpfen 2 genau der Ordnung im Objektivadapter 8 entspricht.

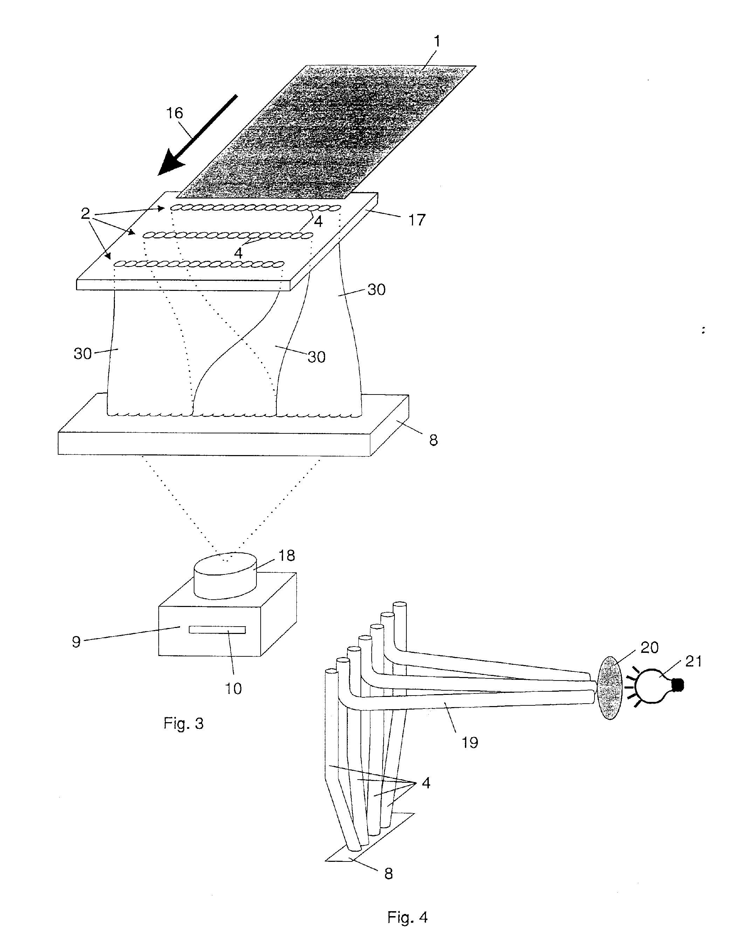

In Fig.3 ist eine alternative Ausführungsform der Erfindung dargestellt. Der Gegenstand 1 wird dabei über einen Träger bzw. eine Platte 17 od.dgl. befördert. In der Platte 17 oder auch in getrennten Tragteilen ist quer zur Bewegungsrichtung 16 eine Anzahl von Lichtleitern bzw. Lichtleiterfasern 4 angeordnet, die zu einem Aufnahmekopf 2 zusammengefaßt sind und einen Bildkanal 30 bilden. Diese zeilenförmigen Aufnahmeköpfe 2 sind in gegenseitigen Abständen angeordnet und nehmen zeitversetzt denselben Gegenstandsbereich auf und bilden diesen auf den Zeilensensor 10 ab. Elektronisch werden die demselben Gegenstandsbereich 6 zugeordneten, zeitversetzt aufgenommenen und unterschiedliche spektrale Zusammensetzung aufweisenden Bilder einander zugeordnet bzw. zusammengehörig ausgewertet.

Auch gemäß Fig.3 sind die Lichtleiter 4 der einzelnen Bildkanäle 30 von den einzelnen Aufnahmeköpfen 2 zu dem Objektivadapter 8 geführt und werden über eine entsprechende Übertragungsoptik 18 auf den Zeilensensor 10 nebeneinander abgebildet. Die Auswertung erfolgt wie im Zusammenhang mit Fig.1 beschrieben.

Bei der Anordnung gemäß Fig.3 sind die Aufnahmeköpfe 2 mehr oder weniger ortsfest angeordnet. Die einzelnen Lichtleiter 4 bzw. Lichtleiterfasern können voneinander beabstandet sein, sodaß zwischen ihnen weitere Lichtleiter(fasern) 19 angeordnet werden können (Fig.4), mit denen eine Beleuchtung des Gegenstandsbereichs 6 gegebenenfalls über auswechselbare Farbfilter 20 mittels einer Beleuchtungseinrichtung 21 erfolgen kann.

Die gegenstandsnahen Enden der Lichtleiter(fasern) 19 können zwischen den Lichtleiterfasern 4 oder neben diesen angeordnet sein. Die den einzelnen beabstandeten Reihen der Lichtleiter(fasern) 4 der einzelnen Aufnahmeköpfe 2 bzw. Bildkanäle 30 zugeordneten Lichtleiterfasern 19 beleuchten bei Anordnung unterschiedlicher Farbfilter 20 die von den einzelnen Aufnahmeköpfen 2 betrachteten Gegenstandsbereiche 6 mit Licht unterschiedlicher Farbe bzw. spektraler Zusammensetzung.

Die Farbfilter20 könnten auch im Bereich dergegenstandsnahen Enden der Lichtleiter(fasern) 19 angeordnet bzw. ausgebildet sein. Auch könnten Farbfilter 3 in den Bildkanälen 30 zwischen dem Gegenstand 1 und dem Zeilensensor 10 angeordnet sein, in vergleichbarer Weise wie dies bei der Anordnung gemäß Fig. 1 der Fall ist.

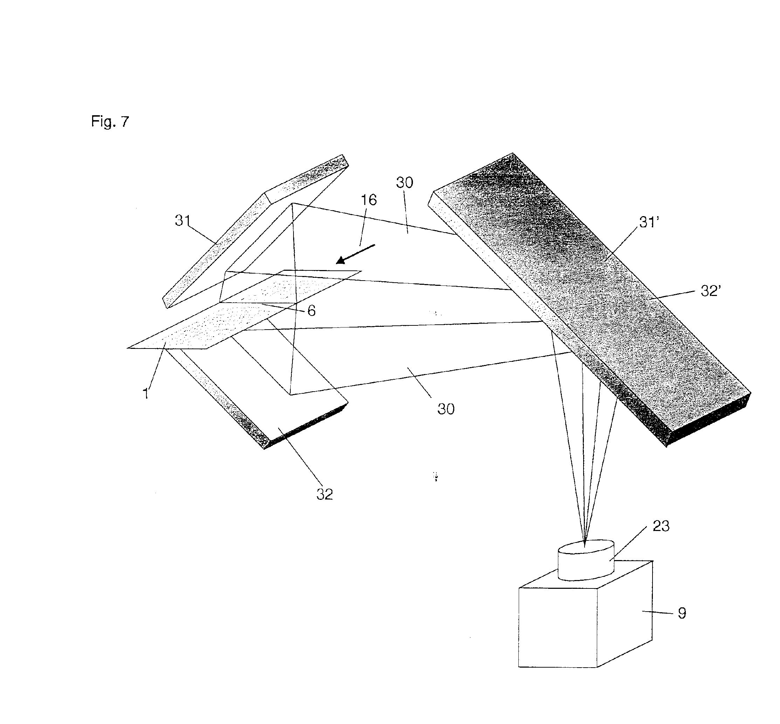

Figuren 7 bis 9 zeigen eine andere Ausführungsform für die Gestaltung der Bildkanäle 30 bei einer erfindungsgemäßen Anordnung. Prinzipiell können die einzelnen Abbildungen desselben Gegenstandsbereiches 6 auf dem Zeilensensor auf verschiedene Weise erfolgen; die erfindungsgemäße Grundidee, nämlich mehrere Ansichten desselben Gegenstandsbereiches nebeneinander auf eine einzige Zeilen-oder TDI-Kamera bzw. den Zeilensensor einer derartigen Kamera abzubilden, bleibt unverändert. Wie im folgenden beschrieben wird, können derartige Bildkanäle auch unter Verwendung von Spiegeln oder Prismen erstellt werden. Es ist auch möglich, Bildkanäle 30 durch die Verwendung von Spiegeln und/oder Prismen und/oder Lichtleitern zu erstellen. Dabei können die Spiegel Prismen und Lichtleiter färbig ausgebildet sein bzw. für unterschiedliche Wellenlängen unterschiedliche Durchlässigkeit bzw. Reflexionseigenschaften besitzen, sodaß die betrachteten Gegenstandsbereiche in unterschiedlichen spektralen Bereichen abgebildet bzw. betrachtet werden, um aus den unterschiedlichen Bildern die entsprechenden Aussagen ableiten zu können. Beim Einsatz von Spiegeln bzw. Prismen erlangt man den Vorteil, daß man bei der Bildauflösung nicht durch die Anzahl der Glasfasern der Glasfaserleiter 4 beschränkt ist, sondern nur durch die Bildauflösung des Zeilensensors 10. Durch Einsatz eines entsprechend langen Zeilensensors 10 kann der Abbildungsmaßstab relativ groß gehalten werden; es wird lediglich erfordert, daß alle gewünschten Bilder des Gegenstandsbereiches 6 auf dem Zeilensensor 10 nebeneinander abgebildet werden können.

Besonders beim Einsatz von TDI-Kameras ist es wichtig, daß für alle abgebildeten Gegenstandsbereiche derselbe Abbildungsmaßstab gilt und keine perspektivischen Verzerrungen auftreten, da ansonsten das TDI-Prinzip nicht funktionieren würde bzw. unscharfe Bildzonen auftreten würden. Bei derartigen TDI-Kameras wird die Bildinformation entlang eines Weges integriert und es ist für eine zuverlässige und genaue Auswertung erforderlich, daß in der selben Zeiteinheit immer über gleiche Wege integriert wird, sodaß eine Korrelation zwischen den einzelnen Bildern bzw. Bildinformationen vorhanden ist. Eine deratige verzerrungsfreie Abbildung kann mit Spiegeln und/oder mit Prismen gut realisiert werden.

Fig. 6 zeigt eine Anordnung, bei der von einem Gegenstand 1 mit Spiegeln 31 und 32 ein und derselbe Gegenstandsbereich über zwei Bildkanäle 30 auf den Zeilensensor 10 abgebildet wird, welcherZeilensensor 10 sich im Gehäuse 9 der Kamera befindet. Die Abbildung der Bildkanäle 30 erfolgt überdie Optik 23 der Kamera. Auf diese Weise werden zwei verzerrungsfreie Abbildungen desselben Gegenstandsbereiches 6 gewonnen, die einander entsprechen.

In Fig. 6 wird ein weiterer Bildkanal 30 mittels des Spiegels 33 erstellt, der die Rückseite des Gegenstandes 1 abtastet und über die Optik 23 auf den Zeilensensor 10 abbildet.

Eine andere Geometrie zur Ausbildung von Bildkanälen 30 ist in Fig. 7 dargestellt. Gemäß dieser Figur bewegt sich ein Gegenstand 1 in Richtung des Pfeiles 16 zwischen zwei im Winkel angeordneten Spiegeln 31 und 32 hindurch. Die Spiegel 31 und 32 erstellen zwei Bildkanäle 30, die über den jeweiligen Spiegeln 31,32 zugeordnete Umlenkspiegel 31' und 32' umgelenkt und über die Optik 23 auf den Zeilensensor 10 abgebildet werden. Im vorliegenden Fall sind die Umlenkspiegel 31' und 32' für die beiden Bildkanäle 30 einstückig ausgebildet d.h. sie werden von ein und demselben Spiegel gebildet. Die beiden Bildkanäle 30 gemäß Fig. 7 tasten nicht denselben Gegenstandsbereich ab, sondern tasten den Gegenstand 1 an gegenüberliegenden Seiten ab. Zur Erstellung mehrerer Bildkanäle 30 zur Abtastung ein und desselben Gegenstandsbereiches 6 können neben den Spiegeln 31 und 32 weitere Spiegel angeordnet werden, die weitere Bildkanäle 30 erstellen, die über weitere Umlenkspiegel über die Optik 23 auf den Zeilensensor abgebildet werden. Bei einer Anordnung gemäß Fig. 7 kann eine Abbildung des Gegenstandsbereiches 6 mit voneinander beabstandeten Bildkanälen 30 bzw. seitlich versetzt erfolgen, ähnlich wie es in Zusammenhang mit der Fig. 3 beschrieben wurde; entsprechend kann auch die elektronische Auswertung erfolgen.

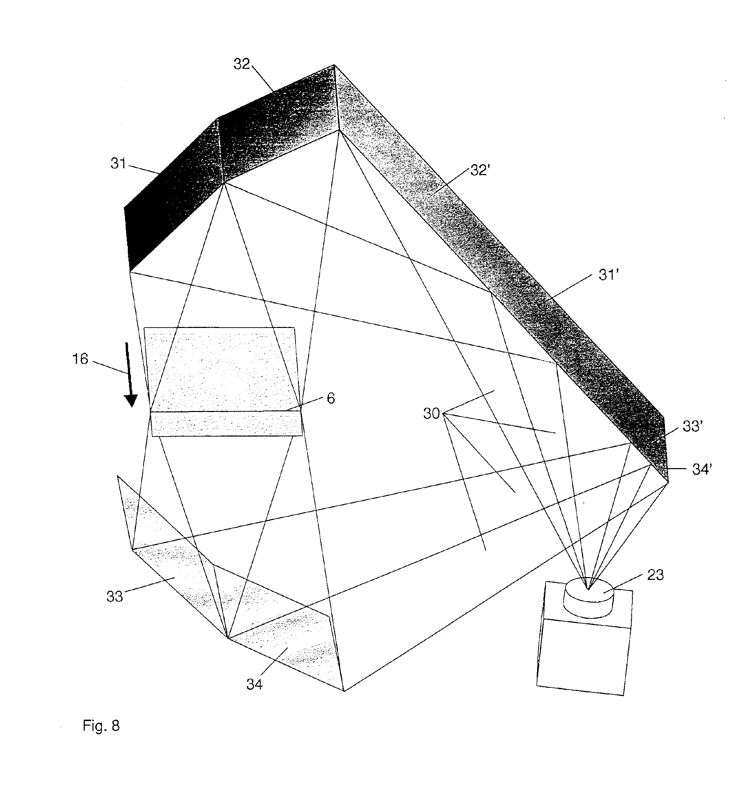

Fig. 8 zeigt eine Anordnung, bei der ein Gegenstand 1, der sich in Richtung des Pfeiles 16 bewegt, auf der einen Seite von zwei Bildkanäle 30 bestimmenden Spiegeln 31 und 32 abgetastet wird, wobei die von diesen Spiegeln erstellten Bildkanäle 30 über einen einzigen Umlenkspiegel mit Spiegelbereichen 31', 32' für die jeweiligen Spiegel 31 und 32 abgebildet werden. Die Rückseite des Gegenstandes 1 wird mittels Spiegel 33 und 34 abgetastet, die wiederum jeweils einen Bildkanal 30 erstellen, die über Spiegelbereiche 33' udn 34' über die Optik 23 auf dem Zeilensensor 10 abgebildet werden. Im vorliegenden Fall sind die vier Umlenkspiegel von einem einzigen Spiegel gebildet.

In den Fig. 6,7 und 8 sind keine Farbfilter in den Bildkanälen dargestellt, da anstelle der oder zusätzlich zu den Farbfiltern die Spiegel als Farbspiegel ausgebildet sein können, die für verschiedene Bildkanäle verschiedene Farbreflexionseigenschaften besitzen.

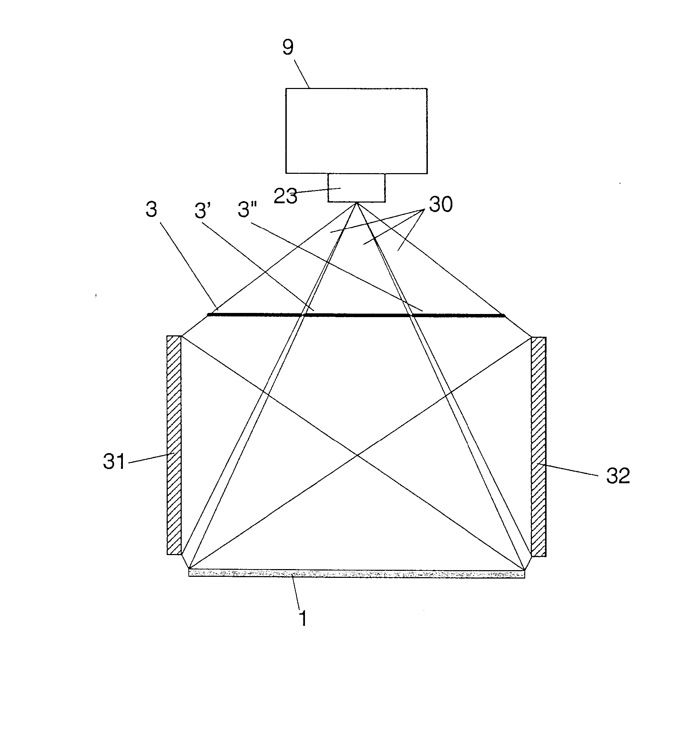

Eine Anordnung zur Erstellung einer einseitigen perspektivisch verzerrungsfreien Mehrfachansicht eines Gegenstandes für Farbaufnahmen ist in Fig. 9 beispielsweise dargestellt. Der Gegenstand 1 wird einerseits über den mittleren Bildkanal 30 direkt von der zeilenkamera abgetastet und anderseits über zwei weitere mit zwei seitlich des Gegenstands angeordneten Spiegeln 31 und 32 erstellten Bildkanälen 30. Alle drei Bildkanäle 30 werden auf dem Zeilensensor 10 nebeneinander abgebildet. Im vorliegenden Fall sind auch Farbfilter 3,3',3" eingezeichnet, die z.B. ein Rotfilter, ein Grünfilter und ein Blaufiltersein können, um eine Abbildung des Gegenstandsbereiches bzw. des Gegenstandes 1 in diesen drei Farben erhalten. Die vorgesehenen Spiegel 31,32 könnten die Farbfilter mit entsprechenden Farbreflexionseigenschaften unterstützen.

Es wird bemerk, daß wei bei allen Ausführungsformen die Farbfilter an irgendeiner Stelle zwischen dem Gegenstndsbereich 6 und dem Zeilensensor 10 liegen können. Bei der Ausbildung von Bildkanälen mit einer Reihe von Spiegeln (Fig.7) könnte allenfalls bei einer räumlich versetzten Betrachtung des Gegenstandsbereiches 6 der Gegenstand an den bezüglich seiner Bewegungsrichtung versetzt betrachteten Stellen mit verschiedenem Licht beleuchtet sein, sodaß eine Abbildung des Gegenstandes in diesen verschiedenen Farben erfolgt.

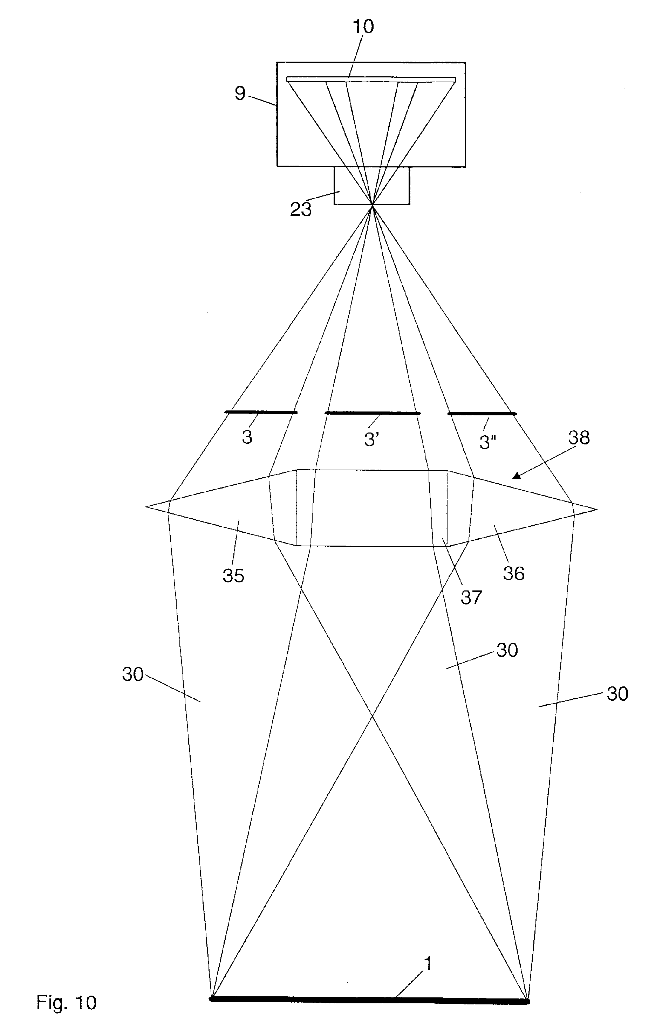

Fig. 10 zeigt eine weitere Möglichkeit, von einem Gegenstandsbereich 6 über verschiedene Bildkanäle 30 eine Anzahl von Abbildungen des Gegenstandsbereiches auf den Zeilensensor bzw. TDI-Sensor 10 verzerrungsfrei zu erreichen. Zwischen dem Gegenstand 1 und die Zeilenkamera ist ein symmetrischer Brechungsbauteil 38 aus Glas, Kunststoff od.dgl. angeordnet. DerBrechungsbauteil istderartkonstruiert, daß er beidseitig von einem planparallelen Mittelteil 37jeweils ein Prisma 35, 36 umfaßt. In Fig. 10 ist der Strahlengang der drei Bildkanäle 30 dargestellt.

Im vorliegenden Fall sind die Farbfilter 3,3' und 3" zwischen dem Brechungsbauteil 38 und der Optik 23 angeordnet; ohne weiteres könnten diese Filter auch innerhalb des Gehäuses 9 der Kamera und/oder zwischen dem Gegenstand 1 und dem Brechungsbauteil 38 angeordnet sein.

Bei der erfindungsgemäßen Vorgangsweise hat eine mehrfache Abbildung ein und desselben Gegenstandsbereiches bzw. ein und derselben Zeile des Gegenstandes auf die Sensorzeile 10 zu erfolgen. Aufgrund der Relativbewegung zwischen der erfindungsgemäßen Anordnung und dem Gegenstand 1 wird so ein bestimmter Teilbereich oder der gesamte Bereich des Gegenstandes 1 sukzessive bzw. in Form von einzelnen aufeinanderfolgenden Zeilen auf den Zeilensensor 10 abgebildet. Die Signale der einzelnen Sensorpunkte des Zeilensensors 10 werden der elektronischen Bildverarbeitungs- bzw. -auswerteeinheit 14 zugeführt.

Durch die Anordnung von Optiken in den Bildkanälen 30 zumeist am Beginn und/oder am Ende bzw. einer Optik 23 von der Kamera zur Bündelung oder zur Streuung des übertragenen Lichtes können bestimmte Gegenstandsbereiche größer oder kleiner abgenommen und übertragen werden und entsprechend verkleinert oder vergrößert auf den Zeilensensor 10 abgebildet werden. Damit kann die Anordnung an verschieden große Gegenstände 1 angepaßt werden.

Wichtig ist es, daß bei der erfindungsgemäßen Vorgangsweise im Prinzip nur eine einzige Zeile des Gegenstandes 1 zu beleuchten ist, nämlich die gerade abgebildete Zeile, was insbesondere bei rasch bewegten Gegenständen in Hinblick auf die Erzielung einer ausreichenden Beleuchtungsstärke von Vorteil ist.

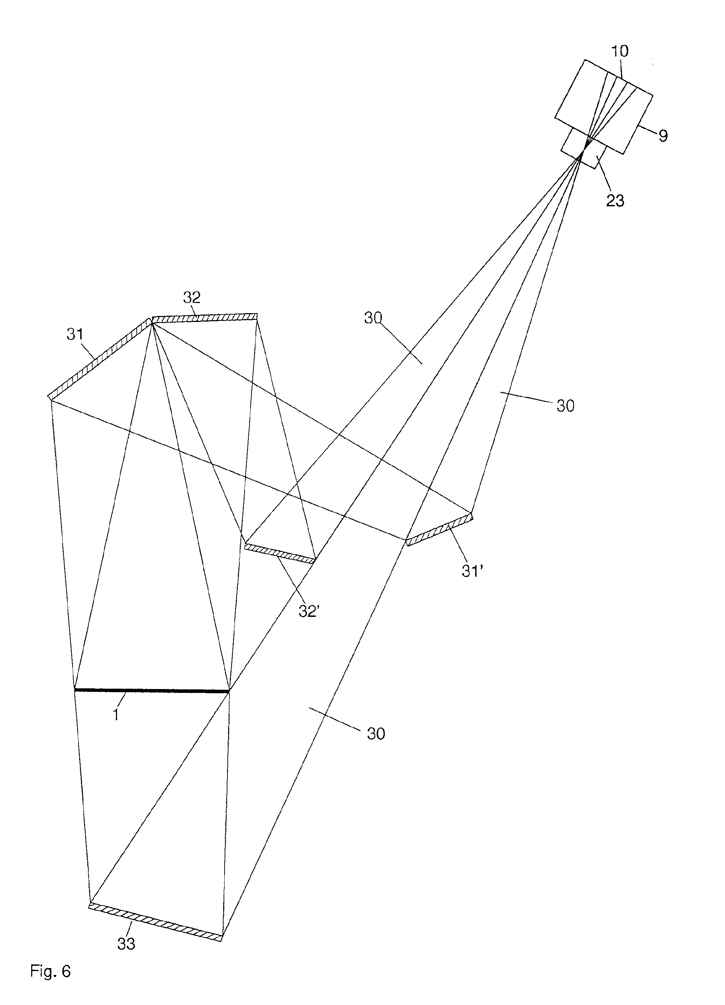

In Fig. 5 ist schematisch ein Spezialfall eines Zeilensensors 10 im Schnitt dargestellt, der eine Mehrzahl von aufeinanderfolgenden Sensorzeilen 10" besitzt; derartige Zeilensensoren werden als TDI-Sensoren bezeichnet und sind im Handel erhältlich. Fig. 5 zeigt eine Zeile 24 am Gegenstand 1 in drei aufeinanderfolgenden Stellungen im Zuge ihrer Bewegung relativ zur Kamera. Während sich die Zeile 24 in Bewegungsrichtung 16 bewegt wird sie mittels der Abbildungsoptik 23 nacheinander auf die einzelnen Sensorzeilen 10" des TDI-Sensors 10 möglichst ident abgebildet. Im vorliegenden Fall von fünf Sensorzeilen 10" bedeutet dies, daß die Zeile 24 und alle anderen Zeilen des Gegenstandes 1 auf alle fünf Zeilen 10" je einmal abgebildet werden; die aus diesen im vorliegenden Fall fünfAbbildungen resultierenden Meßsignale werden von der elektronischen Basis 10' summiert und der Bildverarbeitungseinheit 14 zugeführt; auf diese Weise können auch geringere Lichtmengen ausreichend genau verarbeitet werden, da die von einer einzigen Zeile 24 stammenden Lichtmengen fünf mal gemessen und damit die Signalintensität verfünffacht wird. Dies ist insbesondere bei Messungen, bei denen sich die Gegenstände sehr rasch bewegen, von Vorteil. Auch bei dieser Meßanordnung ist jedem Gegenstand 24 immer nur ein einziger Zeilensensor 10 zugeordnet; es wird immer ein und dieselbe Zeile 24 auf einen einzigen Zeilensensor 10" abgebildet bzw. jede Zeile fünfmal hintereinander abgebildet und die Abbildungen summiert ausgewertet. Die Anzahl der Sensorzeilen 10", auf die die Abbildung ein und desselben Gegenstandsbereiches 6 erfolgt, ist wählbar.

Die Auswertung der in Fig.5 dargestellten Signale des TDI-Sensors erfolgt elektronisch in der Bildverarbeitungseinheit 14, nachdem die Signale der einzelnen Zeilen 10" summiert und entsprechend einer Abbildung auf eine einzige Zeile ausgewertet werden; aufeinanderfolgende Zeilen 24 des Gegenstandes 1 werden elektronisch zu einem Bild zusammengesetzt und können auf dem Monitor 15 dargestellt werden.

Die Länge der Zeilensensoren 10 ist in jedem Fall derart bemessen, daß die Bilder aller gewünschten Bildkanäle 30 nebeneinander auf dem Zeilensensor 10 Platz finden.

Bei der Auswertung der Bilder bzw. Lichtsignale gemäß den Anordnungen nach Fig. 1, 5, 6 und 8-10 werden die Zeilen 24 des Gegenstandes 1 gleichzeitig nebeneinander abgebildet, da die Aufnahme und Übertragung der Bilder desselben Gegenstandsbereiches 6 gleichzeitig stattfindet. Bei der Anordnung gemäß Fig.3 und gegebenenfalls gemäß Fig. 7, wenn zusätzliche Spiegel nicht auf denselben Ort wie die Spiegel 31 bzw. 32 ausgerichtet sind, werden die Gegenstandsbereiche 6 bzw. -zeilen zu unterschiedlichen Zeiten abgetastet bzw. aufgenommen und übertragen, sodaß auf einen Monitor entweder durch elektronische Bearbeitung die unterschiedliche Farben besitzenden Abbildungen des Gegenstandes nebeneinander abgebildet werden können oder daß bei Verzicht auf eine derartige elektronische Zwischenspeicherung die Bilder unterschiedlicher Farbzusammensetzung eine zeitlich bedingte lagemäßige Verschiebung bei der Darstellung auf dem Monitor 15 besitzen.

Unter einer, verzerrungsfreien Abbildung wird insbesondere eine Abbildung verstanden, bei der jeweils betrachtete Gegenstandbereich von den unterschiedlichen Bildkanälen in gleicher Weise, insbesondere gleicher Größe und/oder gleichem Betrachtungswinkel abgebildet wird.

## Patentansprüche

1. Verfahren zum Erkennen bzw. zur Kontrolle von Flächenstrukturen bzw. der Oberflächenbeschaffenheit von Gegenständen (1), z.B. Banknoten, Stoffen, Druckerzeugnissen, Werkstücken od.dgl., bei dem die Gegenstände (1) mit zumindest einer Bildaufnahme und/oder -übertragungseinheit (2) einer Zeilenkamera (9) betrachtet bzw. auf die Zeilenkamera abgebildet werden, an welche Zeilenkamera (9) Bildverarbeitungs- und Auswerteeinheiten (14) angeschlossen sind, dadurch gekennzeichnet, daß mit der eine Mehrzahl von Bildkanälen (30) aufweisenden Bildaufnahme- und -übertragungseinheit ein- und derselbe Gegenstandsbereich (6) betrachtet bzw. mehrfach abgebildet wird, wobei die einzelnen überdie jeweiligen Bildkanäle (30) übermittelten Bilder dieses Gegenstandsbereiches (6) auf ein- und denselben, insbesondere einzigen, Zeilensensor (10) derZeilen -bzw. TDI-Kamera (9) abgebildet werden.

2. Verfahren nach Anspruch 1, dadurch gekennzeichnet, daß derselbe Gegenstandsbereich (6) gleichzeitig mehrfach abgetastet und abgebildet wird und die einzelnen Bilder mit den bzw. über die Bildkanäle(n) (30) gleichzeitig auf nebeneinanderliegende, insbesondere sich nicht überschneidende Bereiche desselben Zeilensensors (10) abgebildet werden.

3. Verfahren nach Anspruch 1, dadurch gekennzeichnet, daß derselbe Gegenstandsbereich (6) mit bzw. über jeweils einen(m) anderen Bildkanal (30) in zeitlichen Abständen auf nebeneinanderliegende, insbesondere sich nicht überschneidende Bereiche des Zeilensensors (10) abgebildet wird.

4. Verfahren nach einem der Ansprüche 1 bis 3, dadurch gekennzeichnet, daß in den einzelnen Bild- übertragungswegen bzw. Bildkanälen (30) zwischen Gegenstand (1) und Zeilensensor (10) jeweils unterschiedliche Filterwirkung besitzende Farbfilter (3) angeordnet werden, oder daß der abzubildende Gegenstandsbereich (6) bei einer Abtastung mit unterschiedlichen Bildkanälen (30) jeweils mit Licht unterschiedlicher spektraler Zusammensetzung bzw. unterschiedlicher Wellenlänge beleuchtet wird.

5. Verfahren nach einem der Ansprüche 1 bis 4, dadurch gekennzeichnet, daß der Gegenstandsbereich (6) über die unterschiedlichen Bildkanäle (30) verzerrungsfrei, insbesondere ohne perspektivische Verzerrung bzw. mit demselben Abbildungsmaßstab, z.B. durch Spiegelung, abgebildet wird.

6. Anordnung zum Erkennen bzw. zur Kontrolle von Flächenstrukturen bzw. der Oberflächenbeschaffenheit von Gegenständen (1), z.B. Banknoten, Stoffen, Druckerzeugnissen, Werkstücken od.dgl., bei der die Gegenstände (1) mit zumindest einer Bildaufnahme- und/oder -Übertragungseinheit (2) einer Zeilenkamera (10) betrachtet bzw. auf die Zeilenkamera (10) abgebildet werden, an welche Bildverarbeitungs- und - auswerteeinheiten (14) angeschlossen sind, insbesondere zur Durchführung des Verfahrens nach einem der Ansprüche 1 bis 4, dadurch gekennzeichnet, daß die bzw. jede Bildaufnahme-und/oder -übertragungseinheit eine Mehrzahl von, d.h. zumindest zwei, eigenständigen Bildkanälen (30) umfaßt, die zur Aufnahme und Abbildung ein- und desselben Gegenstandsbereiches (6) eingerichtet sind und daß an die einzelnen Bildkanäle (30) zur Abbildung dieser Mehrzahl von Bildern des Gegenstandsbereiches (6) ein, insbesondere ein einziger, Zeilensensor (10) der Zeilenkamera (10) angeschlossen ist.

7. Anordnung nach Anspruch 6, dadurch gekennzeichnet, daß die von den einzelnen Bildkanälen (30) abgebildeten Bilder des Gegenstandsbereiches (6) auf dem Zeilensensor (10) nebeneinanderliegen und insbesondere sich nicht überschneiden.

8. Anordnung nach Anspruch 6 oder 7, dadurch gekennzeichnet, daß der vorgesehene Zeilensensor (10) die einzige vorhandene Sensorzeile der eingesetzten Zeilenkamera (10) ist oder daß der Zeilensensor (10) in Form einer Anzahl von nebeneinanderliegenden Sensorzeilen (10") aufweisenden Zeilensensor-Arrays eines TDI-Sensors vorliegt, wobei die ein und denselben Gegenstandsbereich betreffende Bildinformation aus jedem eigenen Bildkanal (30) auf im Array aufeinanderfolgende Zeilensensoren (10") abbildbar ist und daß zur Summierung der Ausgangssignale der einzelnen Zeilensensoren (10") auf die jeweils derselbe Gegenstandsbereich (6) in Folge abgebildet ist, den Zeilensensoren (10") ein Summierer nachgeschaltet ist, an den die Auswerteeinheit (14) angeschlossen ist.

9. Anordnung nach einem der Ansprüche 6 bis 8, dadurch gekennzeichnet, daß zur Ausbildung einer Relativbewegung zwischen dem Gegenstand (1) und den Bildkanälen (30) der Gegenstand (1) und/oder die Bildkanäle (30) auf einer Transporteinheit (5) angeordnet sind, und daß vorzugsweise der Gegenstand (1) an den Bildkanälen (30), insbesondere mit konstanter Geschwindigkeit, vorbeibewegbar ist.

10. Anordnung nach einem der Ansprüche 6 bis 9, dadurch gekennzeichnet, daß vorzugsweise in jedem Übertragungsweg bzw. Bildkanal (30), d.h. zwischen dem Gegenstand (1) und dem Zeilensensor (10), zumindest ein gegebenenfalls auswechselbares Farbfilter (3,3',3") angeordnet ist.

11. Anordnung nach einem der Ansprüche 6 bis 10, dadurch gekennzeichnet, daß in unterschiedlichen Übertragungswegen bzw. Bildkanälen (30) für unterschiedliche Spektralbereiche durchlässige Filter (3) angeordnet sind.

12. Anordnung nach einem der Ansprüche 6 bis 12, dadurch gekennzeichnet, daß die mit den einzelnen Bildkanälen (30) auf den Zeilensensor (10) nebeneinander abgebildeten Bilder des Gegenstandes (1) im wesentlichen mit ihren Durchmesserbereichen bzw. mit ihrer gesamten Bildbreite auf den Zeilensensor (10) abgebildet sind.

13. Anordnung nach einem der Ansprüche 6 bis 12, dadurch gekennzeichnet, daß zumindest ein Bildkanal (30) zumindest ein gegebenenfalls mit einer Aufnahmeoptik (23') und/oder Abbildungsoptik (23) versehenes Lichtleiterkabel (4) mit zur Bildübertragung geordnet angeordneten Lichtleiterfasern umfaßt.

14. Anordnung nach einem der Ansprüche 6 bis 13, dadurch gekennzeichnet, daß zur Ausbildung eines Bildaufnahmekopfes (2) für einen Bildkanal (30) eine Anzahl von zeilen- bzw. reihenförmig nebeneinander angeordneten zur Bildübertragung geordnet angeordnete Lichtleiterfasern aufweisende Lichtleiter (4) zeilen -bzw. reihenförmig nebeneinander angeordnet ist, welche Reihe von Lichtleitern (4) im wesentlichen quer zur Richtung (16) der Relativbewegung bzw. zur Bewegungsrichtung (16) des Gegenstandes (1) verläuft.

15. Anordnung nach Anspruch 14, dadurch gekennzeichnet, daß jeder Reihe von bildaufnehmenden Lichtleitern (4) Beleuchtungseinrichtungen, vorzugsweise neben und/oder zwischen bildaufnehmenden Lichtleitern (4) angeordnete, Licht von einer Lichtquelle (21) heranführende bzw. den Gegenstand (1) beleuchtende, weitere Lichtleiter (19) zugeordnet sind.

16. Anordnung nach Anspruch 14 oder 15, dadurch gekennzeichnet, daß unterschiedlichen Bildaufnahmeköpfen (2) Licht unterschiedlicher Wellenlänge bzw. spektraler Zusammensetzung abstrahlende Lichtquellen (21) zugeordnet sind oder daß zwischen der Lichtquelle (21) und dem Gegenstand (1) unterschiedliche Durchlässigkeit aufweisende, gegebenenfalls austauschbare Farbfilter (3) vorgesehen sind.

17. Anordnung nach einem der Ansprüche 14 bis 16, dadurch gekennzeichnet, daß die einzelnen Lichtleiter (4) in einer dem Zeilensensor (10) gegenüberliegenden Wand bzw. einem Träger bzw. Objektivadapter (8) nebeneinander, insbesondere im wesentlichen in paralleler Richtung zum Zeilensensor (10), befestigt bzw. festgelegt sind.

18. Anordnung nach einem der Ansprüche 14 bis 17, dadurch gekennzeichnet, daß die Bildaufnahmeköpfe (2) längs des abzutastenden Gegenstandsbereiches (6) nebeneinander und/oder gegenüberliegend der Reihe nach angeordnet sind.

19. Anordnung nach einem der Ansprüche 14 bis 18, dadurch gekennzeichnet, daß die Bildaufnahmeköpfe (2) über biegbare Lichtleiter (4) mit der Zeilenkamera (10) verbunden sind.

20. Anordnung nach einem der Ansprüche 6 bis 19, dadurch gekennzeichnet, daß zumindest ein Bildkanal (30) zumindest einen den Gegenstandsbereich (6) auf den Zeilen- bzw. TDI-Sensor(10) bzw. dessen Abbildungsoptik (23) abbildenden Spiegel (31,32,33,34,31,32',33',34') umfaßt.

21. Anordnung nach Anspruch 20, dadurch gekennzeichnet, daß zur Erstellung von Bildern unterschiedlicher Farbe in unterschiedlichen Bildkanälen (30) für Licht verschiedener Wellenlänge unterschiedliche Reflexionseigenschaften besitzende (Farb)-Spiegel angeordnet sind.

22. Anordnung nach einem der Ansprüche 6 bis 21, dadurch gekennzeichnet, daß zumindest ein Bildkanal (30) zumindest ein Prisma (35,36) umfaßt, mit dem bzw. über das der Gegenstandsbereich (6) auf den Zeilen- bzw. TDI-Sensor (10) bzw. dessen Abbildungsoptik (23) abbildbar ist.

23. Anordnung nach Anspruch 22, dadurch gekennzeichnet, daß in unterschiedlichen Bildkanälen (30) für Licht unterschiedlicher Wellenlänge unterschiedliche Durchlässigkeit aufweisende (Farb)Prismen (35,36) angeordnet sind.

24. Anordnung nach einem der Ansprüche 6 bis 23, dadurch gekennzeichnet, daß zumindest ein Bildkanal (30) eine Abbildungsoptik (23) umfaßt, mit der ein Gegenstandsbereich (6) direkt auf einem Bereich des Zeilensensors (10) abgebildet ist.
